(19) Europäisches Patentamt
European Patent Office
Office européen des brevets

(11) Publication number: **0 206 714 B1**

(12) # EUROPEAN PATENT SPECIFICATION

(45) Date of publication of patent specification: **13.03.91**

(51) Int. Cl.[5]: **C08C 19/30**

(21) Application number: **86304618.1**

(22) Date of filing: **16.06.86**

(54) **Process for the preparation of an amine terminated polybutadiene.**

(30) Priority: **17.06.85 US 745039**
**24.06.85 US 748068**

(43) Date of publication of application:
**30.12.86 Bulletin 86/52**

(45) Publication of the grant of the patent:
**13.03.91 Bulletin 91/11**

(84) Designated Contracting States:
**BE DE FR GB IT NL**

(56) References cited:
**FR-A- 1 495 086**
**GB-A- 2 138 005**
**US-A- 2 714 605**

(73) Proprietor: **ATOCHEM**
**4 & 8, Cours Michelet La Défense 10**
**F-92800 Puteaux(FR)**

(72) Inventor: **Hinney, Harry R.**
**975 Providence Road**
**Springfield, PA 19064(US)**
Inventor: **Baghdadchi, Jamil**
**219-Sugartown Road**
**Wayne, PA 19087(US)**

(74) Representative: **Cropp, John Anthony David et al**
**MATHYS & SQUIRE 10 Fleet Street**
**London, EC4Y 1AY(GB)**

**EP 0 206 714 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Background of the Invention

The present invention is directed to a method for the preparation of amine terminated polybutadienes involving reacting an alkane- or arene- sulfonate ester with a primary amine or ammonia.

Diamino-terminated compounds containing sulfur dispersed in the carbon-carbon chain are described in US Patent No. 3,338,107. US Patent 4,015,061 describes the preparation of N,N-bis(trialkylsilyl) amino-terminated polymers by treating a lithio-N,N-bis(trialkylsilyl) aryl amine with a diene monomer which are converted to a mono- or diprimary aryl amine-ended polymer. US Patent Nos. 4,070,344 and 4,151,222 describe the preparation of anionically polymerised monomers such as conjugated dienes which are end capped with polyisocyanates or polyisothiocyanates which are then reacted with amine containing compounds to give an imide type end group. The imide type terminated polymer is hydrolysed to form an amine-terminated polymer. US Patent No 4,316,967 describes an amine terminated polymer connected to an epoxy polymer to form a copolymer.

GB-A-2138005 describes functionally terminated hydrocarbon polymers of the general formula

$$X - (M)_n - Y$$

where M may be a polymerised alkene or 1,3-diene, X is H, $SO_3Z$, $NR_1R_2$ or $^{(+)}NR_1R_2R_3{}^{(-)}A$, Y is $SO_3Z$, $NR_1R_2$ or $^{(+)}NR_1R_2R_3{}^{(-)}A$,Z is H, an alkali metal or an alkaline earth metal, $R_1$, $R_2$ and $R_3$ are the same or different and each is H, optionally substituted alkyl, optionally substituted aryl or optionally substituted aralkyl and A is halide, sulphonate or carboxylate.

The polymers are made by anionic polymerisation of a monomer, e.g. butadiene, isoprene or styrene, and terminating the polymerisation by addition of an aminating or sulphonating agent, e.g. 2-di-isopropylaminoethyl chloride, $SO_3$ or sodium bromoethane sulphonate.

According to the present invention, there is provided a process for the preparation of an amine terminated polybutadiene of the formula R(H)N-Z-N(H)R wherein R is hydrogen or R", said process comprising reacting (i) an alkyl- or aryl- sulfonate terminated polybutadiene having the formula A:

$$R'SO_2O\text{-}Z\text{-}OSO_2R' \qquad A$$

where z is a polymer chain made up of repeating units of the structure

II

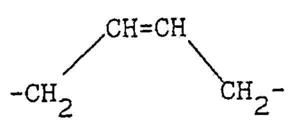

I

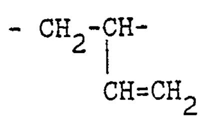

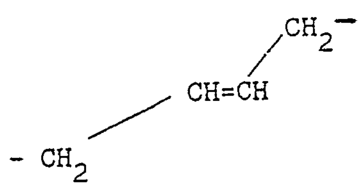

III

wherein the total number of units I and III in the chain exceeds the number of units II in the chain, the total number of units I, II and III in the chain is in the range 5 to 1500, R' is an alkyl group containing from 1 to 16 carbon atoms or a substituted or unsubstituted aryl group or aralkyl group containing one or more benzenoid rings which may be fused or joined by single valency bonds, or (ii) a substituted derivative of said alkyl- or arylsulfonate terminated polybutadiene of formula A wherein the butadiene is replaced by a 2- or 2,3-substituted-1,3-diene having 4 to 12 carbon atoms, at a temperature of from 25° C to 200° C (a) with ammonia under and initial ammonia pressure which will provide at least a stoichiometric amount of ammonia or (b) with a primary amine having the formula $R''NH_2$ wherein R" is a straight or branched chain alkyl group containing from 1 to 10 carbon atoms or a substituted or unsubstituted aryl or aralkyl group containing one or more benzenoid rings which may be fused or joined by single valency bonds. The amine terminated polybutadienes prepared by the process of the present invention are easily produced in high yield with a minimum of any side product formation. The amine-terminated polybutadienes can be reacted

with isocyanates to give polyurea resins or with esters and epoxides to form polyamides and epoxy resins respectively. The amine-terminated polybutadienes may also be reacted with various other polymer segments such as polyimides, polyureas, etc., to give block or graft copolymers.

The process of the invention is preferably effected at a temperature in the range 50 °C to 110 °C.

Where the polymer (i) or (ii) is reacted with ammonia, the ammonia pressure will generally range between about 1.4 MPa and 3.4 MPa (200 psig and 500 psig).

Optionally the process is carried out in the presence of an inert solvent.

The polymers (i) or (ii) employed in the instant invention may be prepared by reacting in the presence of a tertiary amine catalyst, at a temperature of from 15 °C to 150 °C, preferably between 25 °C and 50 °C, optionally in the presence of an inert solvent, an alkane- or arensulfonyl chloride or fluoride and a polyhydroxybutadiene homopolymer wherein the majority of the unsaturation is in the main hydrocarbon chain and the hydroxy groups are predominantly in terminal positions on the main hydrocarbon chain and are predominantly primary and allylic in configuration, or a substituted derivative of said homopolymer wherein the butadiene is replaced by a 2- or 2,3-substituted-1,3-diene having 4 to 12 carbon atoms.

Typical and preferred polymers (i) or (ii) are the lower alkane compounds such as methane or ethane sulfonate terminated poly(substituted)butadiene or paratoluene sulfonate terminated poly(substituted)-butadiene.

An example of a suitable polyhydroxybutadiene is that sold commercially by ARCO Chemical Co., a division of Atlantic Richfield Company, under the Trade Mark "Poly bd" R-45TR or R-45M.

In accordance with this aspect of the invention an amine-terminated polybutadiene is prepared by a novel two-step process which comprises (1) reacting at a temperature of from 15 °C to 150 °C, optionally in the presence of a solvent, a polyhydroxy butadiene homopolymer of the kind described with an alkane- or arenesulfonyl chloride or fluoride in the presence of a tertiary amine catalyst (which will react with generated hydrogen chloride to give a tertiary amine hydrochloride) to form an alkane- or arensulfonate terminated polybutadiene and (2) reacting the formed alkane- or arensulfonated terminated polybutadiene in situ, or after removal from the reaction system with or without purification, at a temperature of from 25 °C to 200 °C preferably 50 °C to 110 °C with a primary amine to form a secondary amine-terminated polybutadiene or with at least a stoichiometric amount of ammonia, and preferably an excess of ammonia, to react with the sulfonate compound to form a primary amine terminated polybutadiene. Optionally the process is carried out in the presence of an inert solvent.

The polyhydroxy butadiene homopolymers employed in the reaction with the alkane or arenesulfonyl chloride or fluoride will have a viscosity range of from 2 to 30 Pa.s (20 to 300 poises) or up to 50 Pa.s (500 poises) at 30 °C. Preferably the homopolymers have a viscosity of 3.5 to 6 Pa.s (35 to 60 poises) or up to 19 to 26 Pa.s (190 to 260 poises). Thus, the poly-hydroxy butadiene homopolymers are liquid or semi-solids flowable, at least when subjected to moderate pressure, at ambient temperatures or at temperatures up to 200 °C. The polyhydroxybutadiene homopolymers will have molecular weights in the range of 400 to 25,000 or higher as determined by cryoscopic, ebullioscopic or osomometric methods.

The polyhydroxy butadiene homopolymers employed in the process differ from diene polymers which are telechelic and/or hydroxy-containing in that the majority of unsaturation in the former is in the main hydrocarbon chain and in that the hydroxy components are in predominantly terminal positions on the main hydrocarbon chain and are predominantly primary and allylic in configuration. Ordinarily, at least 1.8, often at least 2 or more, frequently 2.1 to 2.8 and up to 3 or more hydroxyl groups are present on the average per polymer molecule. Since these hydroxyl groups are predominantly primary, terminal and allylic in structure, with approximately two of the hydroxyl groups being at terminating positions on the main carbon chain, the polymers are highly reactive.

The dienes which are employed to make the polyhydroxy (substituted)butadienes include the unsubstituted, 2-substituted or 2,3-disubstituted l,3-dienes of 4 up to 12 carbon atoms. The diene preferably has up to 6 carbon atoms and the substituents in the 2- and/or 3-position may be hydrogen, alkyl, generally lower alkyl, e.g., of 1 to 4 carbon atoms, aryl (substituted or unsubstituted), halogen, nitro, nitrile. Typical dienes which may be employed are l,3-butadiene, isoprene, chloroprene, 2-cyano-l,3-butadiene, 2,3-dimethyl-1,3-butadiene,2-phenyl-l,3-butadiene, 2-methyl-3-phenyl-l,3-butadiene.

Although polyhydroxy(substituted)butadienes of the above-described type, averaging more than one predominantly primary hydroxyl per molecule, say 1.8 to 3 or more per molecule, may be employed they preferably have an average of at least 2 or more or 2.1 to 2.4 up to 2.8 hydroxyl groups per molecule and the hydroxyl groups are predominantly in terminal allylic positions on the main, generally longest, hydrocarbon chain of the molecule. By "allylic" configuration is meant the alpha-allylic grouping of allylic alcohol; that is, the terminal hydroxyls of the intermediate polymer are attached to a carbon adjacent to a double-bond carbon.

The ratio of cis-1,4 and trans-1,4 and 1,2-vinyl unsaturation which occurs in the diene polymers employed in this invention, the number and location of the hydroxyl groups and the molecular weight of the polymers can be a function of polymerization temperature and the type of addition polymerization system employed in forming the polymer. It has been found that diene polymers of the desired configuration can be obtained using hydrogen peroxide as the catalyst for polymerization in a mutual solvent system. This free-radical addition polymerization usually takes place in solution at a temperature above 100° C. to 200° C.

The reaction to form the polyhydroxy (substituted) butadiene preferably takes place in a mutual solvent system; that is, one which dissolves both the diene monomer and the hydrogen peroxide. Suitable solvents include isopropanol, methanol, sec-butanol, acetone, n-butanol, n-propanol, methyl ethyl ketone saturated alcohols or ketones preferably alkanols, having 2 to 12 carbon atoms. The $H_2O_2$-- solvent system is found to supply hydroxyl groups and the catalytic and solvent effects needed to produce the diene polymers of desired chemical and physical characteristics. In such a polymerization system the alcohol or ketone serves as a solvent for the peroxide and as a solvent or diluent for the diene monomer and is used in an amount suitable to promote adequately rapid but controllable polymerization of the monomer material in the solution to form the diene polymers. The solvent will be free of any group which would interfere with the production of the desired diene polymer. Saturated alcohols are preferred and often those having about the same carbon atom content as the diene monomer will be found most useful. Thus, propanol or isopropanol is often used in butadiene polymerization. The $H_2O_2$-- solvent system may also contain ethers, alcohol-ketones, alcohol-ethers and alcohol-esters which are miscible in water in all proportions and which do not contain polymerizable carbon-to-carbon unsaturation or otherwise interfere with polymerization or enter into the product. The peroxide material may be used in amounts of 1 percent to 15 percent of the reaction mixture to assure a low molecular weight addition polymer product having more than two hydroxyl groups per molecule.

The alkane- or arenesulfonyl chlorides or fluorides employed as reactants to form the alkane- or arenesulfonate terminated polymer conform to the general formula $R'SO_2Cl$ or $R'SO_2F$ wherein R' is an alkane group, generally of 1 to 16 carbon atoms, or a substituted or unsubstituted aryl or aralkyl group containing one or more benzenoid rings which may be fused or joined by single valency bonds. Representative sulfonyl chlorides or fluorides as hereinabove described include, for example, 3-acetylbenenesulfonyl fluoride, benzenesulfonyl chloride, 1-butanesulfonyl chloride, t-butylbenzenesulfonyl chloride, 4-chlorobenzenesulfonyl chloride, 3-chloropropanesulfonyl chloride, methanesulfonyl chloride or fluoride, ethanesulfonyl chloride or fluoride, 4-fluorobenzene-sulfonyl chloride, 2-mesitylenesulfonyl chloride, naphthalenesulfonyl chlorides, nitrobenzenesulfonyl chlorides or fluorides, toluenesulfonyl chlorides or fluorides and 2,4,6-triisopropylbenzenesulfonyl chloride.

The tertiary amine catalysts employed in the formation of the alkane- or arenesulfonate terminated polymer will also act as scavengers to
consume the chloride or fluoride ion when hydrogen chloride or fluoride is generated during the reaction of a polyhydroxy (substituted) butadiene with an alkane- or arenesufonyl chloride or fluoride thus forming a tertiary amine hydrochloride or hydrofluoride which may precipitate from solution depending on the solubility of same in the particular solvent that may be employed. Representative tertiary amines suitable for use in the process of the invention include, for example, the trialkylamines such as trimethyl, triethyl, tripropyl, tributyl, trihexyl, trioctyl, tridecyl, tridodecyl amines triphenylamine, n-dodecyldimethyl-amine, n-tetradecyldimethylamine, n-hexyldecyldimethylamine, N,N,N',N'-tetramethylethylenediamine, N,N-dioctyl-l-octylamine, 1,4-diazabicyclo [2.2.2] octane, 4,(N,N-dimethylamino)pyridine, pyridine, l,8-diazabicyclo [5.4.0] undec-7-ene, methyldiethylamine, butyldimethylamine and benzyldimethylamine polyvinylpyridine. The amount of tertiary amine employed in the process will be at least a 1:1 molar ratio based on the alkane- or arenesulfonyl chloride or fluoride and is preferably used in slight excess at, for example, a molar ratio of 1:1.05.

Optionally solvents or mixtures of solvents which are stable and substantially chemically inert to the components of the reaction system at reaction temperatures may be employed in the formation of the alkane- or arenesulfonate terminated polymer if desired. The same solvent without removal or a new solvent may also be employed in the conversion to the amine-terminated product if desired. Preferably the reactants will be soluble in the solvents employed in order to obtain a convenient rate of reaction. Suitable solvents which may be used in this invention include, for example, alkanes such as hexane, heptane, dimethylhexane, pentane, nonane and decane, alkenes such as pentene, hexene, trimethylpentenes and hexadecene, aromatic hydrocarbons such as benzene, xylene, toluene, ethylbenzene, cumene, diisopropylbenzenes, dibutylbenzenes, substituted benzenes and naphthalenes, ethers such as tetrahydrofuran, diphenyloxide, amides such as dimethylformamide, cycloaliphatic hydrocarbons such as cyclopentane,

methyl cyclopentane, ethyl cyclopentane, cyclohexane, cycloheptane, cyclopentene, cyclohexene and cyclooctene, sulfoxides such as dimethylsulfoxide propylethylsulfoxide, sulfones such as sulfolane and diisopropyl sulfone.

The primary amines which may be employed in the reaction with the alkane- or arenesulfonate terminated polymer include, for example, ethyl amine, propylamines, allylamine, n-amylamine, butylamines, cyclohexylamine, n-tetradecylamine, benzylamine, aniline, toluidines and naphthylamine. The preferred amines are the lower alkylamines such as n-butylamine or ethylamine.

The formation of the alkane- or arenesulfonate terminated polymer may be carried out at a temperature of from 15 °C to 150 °C, preferably between 25 °C and 50 °C. However, higher or lower temperatures may be employed if desirable. The conversion to the amine terminated product will proceed at temperatures of from about 25 °C to 200 °C but is preferably carried out at between 50 °C and 110 °C.

Except when ammonia is employed as reactant in the formation of a primary amine terminated polymer, the process of the present invention is generally carried out at atmospheric pressure or the autogenous pressure of the reaction system, although higher pressures may be used and especially at the higher reaction temperatures or when the reaction temperature is above the boiling point of the catalyst, solvent and/or reactant. Subatmospheric pressure may be employed if desired.

The reactions of the first and second steps may be carried out in any suitable reactor which is generally equipped with means for agitation, means for regulating temperature and pressure if required. Although the order of addition of the reactants and solvents, if any, may vary, a general procedure for carrying out the reaction is to charge the alkane- or arenesulfonate terminated poly (substituted) butadiene into the reaction vessel to which is then added a primary amine or ammonia and heated to the desired temperature and pressure with stirring to form an amine terminated poly (substituted) butadiene. The reaction may be carried out batchwise or as a semicontinuous or continuous process.

Where the two step procedure is used a general procedure is to charge the polyhydroxy (substituted) butadiene (such as ARCO Chemical Co "Poly bd" R45 HT) with the tertiary amine catalyst into the reaction vessel and then add the alkane- or arenesulfonyl chloride or fluoride to the mixture to prepare the alkane-or arenesulfonate terminated product to which is then added a primary amine or ammonia and heated to the desired temperature at atmospheric pressure or higher pressures, if required to form an amine terminated poly-(substituted) butadiene.

The reaction products are recovered and treated by any conventional method, such as distillation, evaporation or fractionation to effect separation from unreacted material, solvent, if any, and by-products. The reaction time is generally dependent upon the reactants employed, solvent, temperature, pressure, as well as tertiary amine catalyst charged but will generally run for from 3 to 4 hours for the first step and 4 to 8 hours for the second step under batch conditions.

The following examples are provided to illustrate the invention in accordance with the principles of this invention but are not to be construed as limiting the invention in any way except as indicated by the appended claims.

## EXAMPLE 1

A 1000 ml three-necked reaction flask was fitted with a magnetic stirrer, an addition funnel, a condenser, and gas inlet and outlet tubes. The flask was flushed with dry nitrogen for 15 minutes. 200.16g of polyhydroxybutadiene (ARCO Chemical Co. "Poly bd" R-45 HT resin having a hydroxyl value of 0.80 meq/g.),304.6g of heptane and 17.01g of triethylamine was added to the reaction flask. To the stirred solution was added dropwise over a 15 minute period 19.27g methanesulfonyl chloride. Stirring was continued for 3 hours at room temperature (22 °C-23 °C) to yield (99.6% as analyzed by InfraRed and NMR)a pale yellow methane sulfonate ester of polyhydroxybutadiene having a viscosity of 5.7 Pa.s (5700 cps.) at 25 °C.

111.8g of the methane sulfonate ester of polyhydroxybutadiene produced above was added to a 1000 ml round bottom three neck reaction flask, equipped with a magnetic stirrer and condenser, along with 206g heptane and 62.15g of n-butylamine. The solution was refluxed at 98 °C for 10 hours. The resulting suspension was filtered and stripped of solvent to yield (92.5% as determined by Infrared (IR) and NMR) a secondary n-butylamine terminated polybutadiene having a viscosity of 7.9 Pa.s (7900 cps.) at 25 °C.

## EXAMPLE 2

The procedure of Example 1 was repeated employing in the first step 302.89g heptane, 200.31g polyhydroxybutadiene ("Poly bd" R-45 HT) resin, 17.06g triethylamine and 19.24g methanesulfonyl chloride. The mixture was stirred for 3 hours at room temperature (23° C) to give a yield of 210g or 98.6% yield of methane sulfonate ester of polyhydroxybutadiene.

To the entire reaction mixture of sulfonate ester there was added 158.0g cyclohexylamine and the mixture stirred at 98° C reflux for 6 hours. IR and NMR analysis showed a yield of yellow liquid cyclohexylamine terminated polybutadiene of 95.41% (205.8g) having a viscosity of 7.943 Pa.s (7943 cps.) at 25° C.

EXAMPLE 3

The procedure of Example 1 was repeated employing in the first step of the reaction 155.14g toluene, 100.0g "Poly bd" R-45 HT, 6.77g pyridine and 16.39g paratoluenesulfonyl chloride. The mixture was stirred at 110° C for 3 hours. Analysis showed a yield of 93.09% (105.36g) of paratoluene sulfonate terminated polybutadiene.

49.06g of the paratoluene sulfonate ester produced was then mixed with 100g toluene and 30.25g n-butylamine and reacted at 110° C for 7 hours with stirring to produce as determined by IR and NMR analysis, a 98.9% yield of n-butylamine terminated polybutadiene having a viscosity of 7.88 Pa.s (7880 cps.) at 25° C.

EXAMPLE 4

The procedure of Example 1 was repeated employing in the first step to prepare a methane sulfonate terminated polybutadiene 311.69g heptane, 215.51g polyhydroxybutadiene, 18.50g triethylamine and 21.58g methanesulfonyl chloride. The reaction mixture was stirred at room temperature (23° C) for 3 hours to give a 98.6% yield of methane sulfonate terminated polybutadiene.

To the entire reaction mixture of methane sulfonate ester there was added 129.0g tertiary butylamine and the mixture stirred at a temperature of 98° C for 9.5 hours. IR and NMR analysis showed a 99.9% yield (224.9g) of yellow viscous (8.847 Pa.s, that is 8847 cps. at 25° C) t-butylamine terminated polybutadiene.

EXAMPLE 5

43g of the methane sulfonate terminated polybutadiene prepared in Example 1 was dissolved in 45g of dry heptane until a homogeneous solution was obtained. To this mixture, with vigorous stirring, there was added 34g (a tenfold excess) of aniline dropwise during a 30 minute period. The mixture was heated to reflux of 98° C for 12 hours and cooled. Filtration and evaporation of the solvent and excess aniline gave 40g of red-brown aniline terminated polybutadiene having a viscosity of 6.3 Pa.s (6300 cps) at 25° C and an amine value of 0.39 meq/g.

EXAMPLE 6

50g of the methane sulfonate terminated polybutadiene as prepared in Step 1 of Example 1 was dissolved in 150g of xylene and placed in a 250 $m^1$ autoclave. 10g of liquid ammonia initial pressure of 2.17 MPa (315 psig) was introduced and the reactor sealed, stirred and heated to 50°-60° C for 6.5 hours. After cooling the brown solution was filtered and the solvent evaporated to give 45g or a 90% yield, as determined by IR and NMR analysis, of primary amine terminated polybutadiene having a viscosity 15.275 Pa.s (15,275 cps) at 25° C with an amine value of 1.22 meq/g.

EXAMPLE 7

100g of methane sulfonate terminated poybutadiene as prepared in Step 1 of Example 1 was dissolved in 50 ml of heptane and placed in a 250 ml autoclave. 15g of liquid ammonia with an initial pressure of 2.17 MPa (315 psig) was added all at once and the reactor sealed, stirred and heated to 50° C to 60° C for 5

hours. The reactor was cooled and the contents drained and filtered and the solvent evaporated to give a viscous brown liquid 15.0 Pa.s (15,000 cps) at 25 °C with an amine value of 1.27 meq/g.

EXAMPLE 8

302g polyhydroxybutadiene (ARCO Chemical Co. "Poly bd" R-45 HT with an OH value of 0.84) with 28.88g of triethylamine was added to a 1 liter three neck flask equipped with a mechanical stirrer, thermometer and dropping funnel. To this mixture there was added dropwise 31.49g methanesulfonyl chloride during a 20 minute period. The exothermic temperature rose to 57-60 °C and the mixture was stirred at this temperature and cooled to 40 °C during a 30 minute period. External heat was then provided to 75 °C-80 °C and the mixture stirred for 7 hours to give a methane sulfonate terminated polybutadiene. To this product mixture there was added 201.0g (a tenfold excess) of n-butylamine all at once and the reaction mixture heated to 70 °C and stirred for 6 hours. After cooling the reaction mixture was filtered and the excess amine evaporated under reduced pressure to give 290.5g of light brown n-butylamine terminated polybutadiene with a viscosity of 6.987 Pa.s (6987 cps) at 25 °C with an amine value of 0.78 meq/g and a yield of over 95% based on the polyhydroxybutadiene.

EXAMPLE 9

The procedure of Example 8 was repeated using 200g polyhdroxybutadiene (OH value of 0.84 meq/g) and 18.5g triethylamine which were thoroughly mixed at 30 °C. To this mixture there was added 20.0g methanesulfonyl chloride dropwise during a 10 minute period and allowed to stir at 60 °C to 70 °C for 7 hours to give methane sulfonate terminated polybutadiene. To this sulfonate mixture 309g of aniline was then added all at once and the mixture stirred at 60 °C to 70 °C for 10 hours. Work up of the product as in Example 8 gave 108g of red viscous aniline terminated polybutadiene, viscosity 7.643 Pa.s (7643 cps) at 25 °C with an amine value of 0.64 meq/g and a yield of 92.5% based on the polyhydroxybutadiene.

EXAMPLE 10

79.92g of polyhydroxybutadiene (ARCO Chemical Co. "Poly bd" R-45 HT) along with 7.2g triethylamine was added to a 250 ml three necked reaction flask equipped with a mechanical stirrer, thermometer and reflux condenser. To this mixture there was added 8.3g (a 5% excess) of methanesulfonyl chloride during a 5 minute period. An exothermic reaction started raising the temperature to 70 °C. The mixture was stirred at 60 °C-70 °C for 4 hours and then cooled to 50 °C. To the methane sulfonate terminated polybutadiene mixture, maintained at 50 °C, 71.09g cyclohexylamine (a tenfold excess) was added all at once and the mixture stirred vigorously. The reaction mixture was then heated to 70 °C and stirred for 5 hours, cooled and filtered twice to give 71g of brown cyclohexylamine terminated polybutadiene having a viscosity of 6.85 Pa.s (6850 cps) at 25 °C with an amine value of 0.79 meq/g.

## Claims

**1.** A process for the preparation of an amine terminated polybutadiene of the formula R(H)N-Z-N(H)R wherein R is hydrogen or R", said process comprising reacting (i) an alkyl- or aryl- sulfonate terminated polybutadiene having the formula A:

$$R'SO_2O\text{-}Z\text{-}OSO_2R' \qquad A$$

where Z is a polymer chain made up of repeating units of the structure

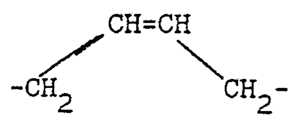

I

II

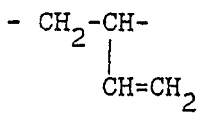

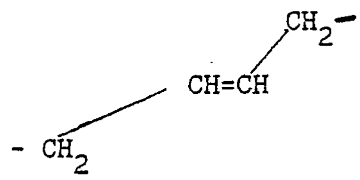

III

wherein the total number of units I and III in the chain exceeds the number of units II in the chain, the total number of units I, II and III in the chain is in the range 5 to 1500, R' is an alkyl group containing from 1 to 16 carbon atoms or a substituted or unsubstituted aryl group or aralkyl group containing one or more benzenoid rings which may be fused or joined by single valency bonds, or (ii) a substituted derivative of said alkyl- or arylsulfonate terminated polybutadiene of formula A wherein the butadiene is replaced by a 2-or 2,3-substituted-1,3-diene having 4 to 12 carbon atoms, at a temperature of from 25° C to 200° C (a) with ammonia under an initital ammonia pressure which will provide at least a stoichiometric amount of ammonia or (b) with a primary amine having the formula $R''NH_2$ wherein R" is a straight or branched chain alkyl group containing from 1 to 10 carbon atoms or a substituted or unsubsituted aryl or aralkyl group containing one or more benzenoid rings which may be fused or joined by single valency bonds.

2. A process according to Claim 1 characterised in that the process is carried out in the presence of a solvent.

3. A process as claimed in Claim 1 or Claim 2 characterised in that the polymer (i) or (ii) is formed by reacting at a temperature of from 15° C to 150° C, and in the presence of a tertiary amine, an alkane- or arenesulfonyl chloride or fluoride and a polyhydroxybutadiene homopolymer wherein the majority of the unsaturation is in the main hydrocarbon chain and the hydroxy groups are predominantly in terminal positions on the main hydrocarbon chain and are predominantly primary and allylic in configuration, or a substituted derivative of said homopolymer wherein the butadiene is replaced by a 2- or 2,3-substituted-1,3-diene having 4 to 12 carbon atoms.

4. A process according to Claim 3 characterised in that the sulfonyl chloride is selected from methanesulfonyl chloride and paratoluenesulfonyl chloride.

5. A process according to Claim 3 or Claim 4 characterised in that the tertiary amine is selected from triethylamine and pyridine.

6. A process according to Claim 3, Claim 4 or Claim 5 wherein the temperature of the reaction to form the polymer (i) or (ii) between 25° C and 50° C.

7. A process according to any one of Claims 3 to 6 wherein the reactions are carried out in the presence of a solvent.

8. A process according to Claim 2 or Claim 7 wherein the solvent is selected from heptane and toluene.

9. A process according to any one of Claims 1 to 8 wherein the polymer (i) or (ii) is reacted with ammonia at an ammonia pressure of between 1.4 MPa to 3.4 MPa (200 psig to 500 psig)

10. A process according to any one of Claims 3 to 9 wherein the temperature of reaction of the alkyl- or arylsulfonate terminated polybutadiene or poly substitued butadiene with the ammonia or primary amine is between 50° C and 110° C.

11. A process as claimed in any one of Claims 1 to 10 wherein the primary amine is selected from t-butylamine, n-butylamine, cyclohexylamine and aniline.

## Revendications

1. Procédé de preparation d'un polybutadiène à terminaisons amino représenté par la formule R(H)N-Z-N-(H)R dans laquelle R est un atome d'hydrogène ou R", caractérisé en ce qu'il comprend la réaction (i) d'un polybutadiène à terminaisons alkyl- ou arylsulfonate représenté parla formule A:

$$R'SO_2O-Z-OSO_2R' \qquad A$$

dans laquelle Z est une chaîne polymère constituée d'unités répétées de structure

II

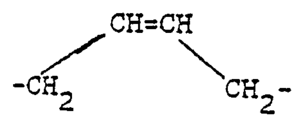

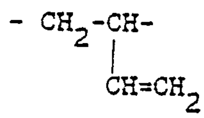

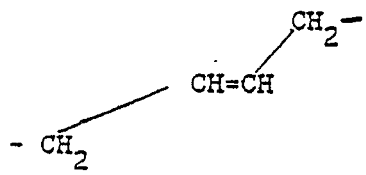

I

III

où le nombre total des unités I et III dans la chaîne dépasse le nombre d'unites II dans la chaîne, le nombre total des unités I, II et III dans la chaîne est de l'ordre de 5 à 1500, R' est un groupe alkyle contenant de 1 à 16 atomes de carbone ou un groupe aryle ou aralkyle substitué ou non substitué contenant un ou plusieurs cycles benzénoïdes qui peuvent être condensés ou réunis par des liaisons de valence uniques, ou (ii) d'un dérivé substitué de ce polybutadiène à terminaisons alkyl- ou arylsulfonate de formule A dans laquelle le butadiène est remplacé par un 1,3-diène substitué en position 2 ou en positions 2,3 ayant 4 à 12 atomes de carbone, à une température de 25 à 200 °C (Ia) avec de l'ammoniac sous une pression d'ammoniac initiale qui va fournir au moins une quantité stoechiométrique d'ammoniac, ou (b) avec une amine primaire ayant la formule $R''NH_2$ dans laquelle R" est un groupe alkyle à chaîne droite ou ramifiée contenant de 1 à 10 atomes de carbone ou un groupe aryle ou aralkyle substitué ou non substitué contenant un ou plusieurs cycles benzénoïdes qui peuvent être condensés ou réunis par des liaisons de valence uniques.

2. Procédé suivant la revendication 1, caráctérisé en ce que le procédé est effectué en présence d'un solvant

3. Procédé suivant les revendications 1 ou 2,. caractérisé en ce que le polymère (i) ou (ii) est formé par réaction à une temperature de 15 á 150 °C et en présence d'une amine tertiaire. d'un chlorure ou d'un fluorure d'alcane- ou arènesulfonyle avec un homopolymère de polyhydroxybutadiène dans lequel la majorité de l'insaturation est dans la principale chaîne hydrocarbonée et les groupe hydroxy sont principalement en positions terminales sur la principale chaîne hydrocarbonée et ont principalement une configuration primaire et allyique, ou un dérivé substitué de cet homopolymère dans lequel le butadiène est remplacé par un 1,3-diène substitué en position 2 ou en positions 2,3 ayant 4 à 12 atomes de carbone.

4. Procédé suivant la revendication 3, caractérisé en ce que le chlorure de sulfonyle est choisi parmi le chlorure de méthanesulfonyle et le chlorure de paratoluènesulfonyle.

5. Procédé suivant les revendications 3 ou 4, caractérisé en ce que l'amine tertiaire est choisie parmi la triéthylamine et la pyridine.

6. Procédé suivant l'une quelconque des revendications 3 à 5, caractérisé en ce que la température de la réaction pour former le polymére (i) ou (ii) est comprise entre 25 et 50 °C.

7. Procédé suivant l'une quelconque des revendications 3 à 6, caractérisé en ce que les réactions sont effectuées en présence d'un solvant,

8. Procédé suivant la revendication 2 ou la revendication 7, caractérisé en ce que le solvant est choisi parmi l'heptane et le toluène,

9. Procédé suivant l'une quelconque des revendications 1 à 8, caractérisé en ce que le polymère (i) ou (ii) est traité avec l'ammoniac à une pression d'ammoniac comprise entre 1,4 MPa à 3,4 MPa (200 à 500 psig).

10. Procédé suivant l'une quelconque des revendications 3 à 9, caractérisé en ce que la température de réaction du polybutadiène à terminaisons alkyl- ou arylsulfonate ou du polybutadiène substitué avec l'ammoniac ou l'amine primaire est comprise entre 50 et 110 °C.

11. Procédé suivant l'une quelconque des revendications 1 à 10, caractérisé en ce que l'amine primaire est choisie parmi la t-butylamine, la n-butylamine, la cyclohexylamine et l'aniline.

## Ansprüche

1. Verfahren zur Herstellung von Polybutadien der Formel R(H)N-Z-N(H)R mit Amino-Endgruppen, worin R Wasserstoff oder R" ist, wobei das Verfahren folgende Schritte umfaßt:
Reaktion
(i) eines Polybutadiens mit Alkyl- oder Arylsulfonat-Endgruppen, welches die Formel (A) aufweist:

$$R'SO_2O-Z-OSO_2R' \quad (A),$$

worin Z eine Polymerkette ist, die aus sich wiederholenden Einheiten der Strukturen

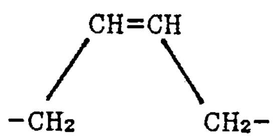

I

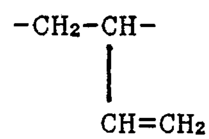

II

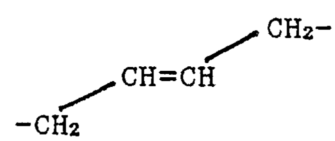

III

besteht, worin die Gesamtzahl der Einheiten I und III in der Kette die Zahl der Einheiten II in der Kette übersteigt, die Gesamtzahl der Einheiten I, II und III in der Kette im Bereich von 5 bis 1500 liegt und R' eine 1 bis 16 Kohlenstoffatome enthaltende Alkylgruppe oder eine substituierte oder unsubstituierte Arylgruppe oder Aralkylgruppe ist, die einen oder mehrere benzolartige Ringe enthält, die zusammenhängend oder durch Einfachbindungen miteinander verbunden sein können, oder
(ii) eines substituierten Derivats des Polybutadiens der Formel (A) mit Alkyl- oder Arylsulfonat-Endgruppen, worin das Butadien durch ein in 2-Stellung oder 2,3-Stellung substituiertes 1,3-Dien mit 4 bis 12 Kohlenstoffatomen ersetzt ist, bei einer Temperatur von 25 bis 200 °C
(a) mit Ammoniak unter einem anfänglichen Ammoniak-Druck, der wenigstens eine stöchiometrische Menge Ammoniak bereitstellt, oder (b) mit einem primären Amin der Formel $R''NH_2$, worin R" eine geradkettige oder verzweigtkettige Alkylgruppe, die 1 bis 10 Kohlenstoffatome enthält, oder eine substituierte oder unsubstituierte Aryl- oder Aralkylgruppe ist, die einen oder mehrere benzolartige Ringe enthält, die zusammenhängend oder durch Einfachbindungen miteinander verbunden sein können.

2. Verfahren nach Anspruch 1, dadurch gekennzeichnet, daß das Verfahren in Gegenwart eines Lösungsmittels durchgeführt wird.

3. Verfahren nach Anspruch 1 oder Anspruch 2, dadurch gekennzeichnet, daß das Polymer (i) oder (ii) dadurch gebildet wird, daß man bei einer Temperatur von 15 bis 150 °C in Gegenwart eines tertiären Amins ein Alkan- oder Arensulfonylchlorid oder -fluorid und ein Polyhydroxybutadien-Homopolymer miteinander umsetzt, worin sich die Mehrheit der ungesättigten Stellen in der Haupt-Kohlenwasserstoffkette findet und sich die Hydroxygruppen vornehmlich in endständigen Positionen an der Haupt-Kohlenwasserstoffkette befinden und vornehmlich von primärer und Allylkonfiguration sind, oder mit einem substituierten Derivat des Homopolymers umsetzt, worin das Butadien durch ein in 2-Stellung oder 2,3-Stellung substituiertes 1,3-Dien mit 4 bis 12 Kohlenstoffatomen ersetzt ist.

**4.** Verfahren nach Anspruch 3, dadurch gekennzeichnet, daß das Sulfonylchlorid ausgewählt ist unter Methansulfonylchlorid und para-Toluolsulfonylchlorid.

**5.** Verfahren nach Anspruch 3 oder Anspruch 4, dadurch gekennzeichnet, daß das tertiäre Amin ausgewählt ist unter Triethylamin und Pyridin.

**6.** Verfahren nach Anspruch 3, Anspruch 4 oder Anspruch 5, worin die Temperatur der Reaktion zur Bildung des Polymeren (i) oder (ii) zwischen 25 und 50 °C liegt.

**7.** Verfahren nach einem der Ansprüche 3 bis 6, worin die Reaktionen in Gegenwart eines Lösungsmittels durchgeführt werden.

**8.** Verfahren nach Anspruch 2 oder Anspruch 7, worin das Lösungsmittel ausgewählt ist unter Heptan und Toluol.

**9.** Verfahren nach einem der Ansprüche 1 bis 8, worin das Polymer (i) oder (ii) mit Ammoniak bei einem Ammoniak-Druck von 1,4 MPa bis 3,4 MPa (200 psig bis 500 psig) umgesetzt wird.

**10.** Verfahren nach einem der Ansprüche 3 bis 9, worin die Temperatur der Reaktion des Polybutadiens mit Alkyl- oder Arylsulfonat-Endgruppen oder des substituierten Polybutadiens mit dem Ammoniak oder primären Amin zwischen 50 und 110 °C liegt.

**11.** Verfahren nach einem der Ansprüche 1 bis 10, worin das primäre Amin ausgewählt ist unter t-Butylamin, n-Butylamin, Cyclohexylamin und Anilin.